# EUROPEAN PATENT APPLICATION

(11) **EP 4 796 603 A1**
(43) Date of publication of application: **26.08.2026**
(21) Application number: 23956232.5
(22) Date of filing: 20.12.2023
(51) Int. Cl.: C09D 7/61, C09D 5/08, C09D 7/20, C09D 133/04, C08L 63/00, C08L 75/04, C08L 33/14

(54) **SOLUTION COMPOSITION FOR GRAPHENE-COATED STEEL SHEET AND COATED STEEL SHEET COATED THEREWITH**

(30) Priority: 17.10.2023 KR 20230138716
(71) Applicant: POSCO Co., Ltd, Gyeongsangbuk-do 37859 (KR)
(72) Inventor: YOO, Hye-Jin, Gwangyang-si, Jeollanam-do 57807 (KR); BYEON, Chang-Se, Gwangyang-si, Jeollanam-do 57807 (KR); KIM, Jung-Su, Gwangyang-si, Jeollanam-do 57807 (KR)
(74) Representative: Meissner Bolte Partnerschaft mbB
(86) International application number: PCT/KR2023/021148
(87) International publication number: WO 2025/084510

(57) **Abstract**

A solution composition for a graphene-coated steel sheet, according to an embodiment, comprises, relative to 100 wt % of solid content: 0.1-30 wt % of graphene; and 55-90 wt % of a main resin comprising two or more kinds of acrylic resins.

## Description

### Technical Field

The present disclosure relates to a solution composition for a graphene-coated steel sheet and a coated steel sheet coated therewith.

### Background Art

Graphene is a material having a two-dimensional (2D) crystal structure with a thickness of a single atomic layer, in which carbon atoms are arranged in a specific pattern, and has a planar structure in which carbon atoms are connected in a hexagonal form.

Graphene has a tensile strength 311 times greater than that of steel, an electron mobility 1,000 times higher than that of silicon, and a thermal conductivity more than 10 times higher than that of copper, is transparent enough to transmit 98% of light, and maintains such properties even when bent or stretched. Due to these properties, graphene may be widely used in nanomaterials, inks, barrier materials, heat dissipation materials, ultralight materials, energy electrode materials, next-generation semiconductors, transparent electrodes, and the like.

In order to easily coat a substrate with graphene over a large area, a solution process has widely been used. In the case of the solution process, a separate binder is required in order to secure adhesion to the substrate.

Accordingly, it is necessary to select a separate binder having sufficient binding force while allowing graphene to be well dispersed, and in order to obtain a sufficient dispersion effect, it is necessary to appropriately select a dispersant that does not adversely affect the physical properties of a coating composition.

### Summary of Invention

### Technical Problem

An aspect of the present disclosure is to provide a solution composition having excellent dispersion stability for a graphene-coated steel sheet.

Another aspect of the present disclosure is to provide a graphene-coated steel sheet having excellent corrosion resistance and adhesion.

### Solution to Problem

According to an aspect of the present disclosure, a solution composition for a graphene-coated steel sheet contains, based on 100 wt% of solid content: 0.1 to 30 wt% of graphene; and 55 to 90 wt% of a main resin including two or more types of acrylic-based resins.

The two or more types of acrylic-based resins may be two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate.

The main resin may further include at least one selected from the group consisting of an epoxy-based resin, a urethane-based resin, a fluorine-based resin, a polyester-based resin, a polyethylene-based resin, and a vinyl chloride-based resin.

The epoxy-based resin may be at least one selected from the group consisting of a bisphenol A-type resin, a bisphenol F-type resin, a novolac resin, an acrylic-modified epoxy resin, a cycloaliphatic resin, and a glycidyl amine-type resin.

The urethane-based resin may be at least one selected from the group consisting of polyurethane prepared from isophorone diisocyanate, adipic acid, and a polyhydric alcohol, acrylic polyol, and polyisocyanate.

The fluorine-based resin may be at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

The composition may further contain a physical property improver or other additives.

The physical property improver may be at least one selected from the group consisting of a titanium-based compound, an ammonium phosphate salt, a vanadium-based compound, an organic phosphoric acid, a phosphoric acid amine salt, and an organic acid.

The physical property improver may be contained in an amount of 5 to 40 wt% based on 100 wt% of solid content.

The other additives may be at least one selected from the group consisting of a leveling agent, a wetting agent, a curing agent, and an antifoaming agent.

The other additives may be contained in an amount of 1 to 5 wt% based on 100 wt% of solid content.

The composition may further contain a solvent, and the solvent may be at least one selected from the group consisting of water, 1-ethyl-2-pyrrolidinone (NEP), and dimethyl sulfoxide (DMSO).

According to another aspect of the present disclosure, a graphene-coated steel sheet includes: a coated steel sheet; and a coating layer formed on at least one surface of the steel sheet from the solution composition for a graphene-coated steel sheet.

The coated steel sheet may be at least one selected from the group consisting of a zinc-coated steel sheet, a zinc-based alloy-coated steel sheet, an aluminum-coated steel sheet, an aluminum-based alloy-coated steel sheet, a cold-rolled steel sheet, and a hot-rolled steel sheet.

### Advantageous Effects of Invention

The solution composition for a graphene-coated steel sheet according to an example embodiment of the present disclosure may have excellent dispersion stability.

The graphene-coated steel sheet according to another example embodiment of the present disclosure may have excellent corrosion resistance and adhesion.

### Best Mode for Invention

The terms used in the present disclosure are for describing the present disclosure and are not intended to limit the present disclosure. In addition, singular forms used in the present disclosure include plural forms unless the context clearly indicates otherwise.

The meaning of the term "comprising," used in the present disclosure, is to specify the configuration and does not exclude the presence or addition of other configurations.

Unless otherwise defined, all terms including the technical terms and scientific terms used in the present disclosure have the same meanings as those which would be commonly understood by those skilled in the art to which the present disclosure pertains. Terms defined in dictionaries are interpreted as having meanings consistent with the relevant technical literature and the disclosure herein.

Hereinafter, the present disclosure will be described in detail.

First, a solution composition for a graphene-coated steel sheet according to an example embodiment of the present disclosure will be described in detail.

The solution composition for a graphene-coated steel sheet according to an example embodiment of the present disclosure may contain, based on 100 wt% of solid content, 0.1 to 30 wt% of graphene and 55 to 90 wt% of a main resin including two or more types of acrylic-based resins.

The content of the solution composition for a graphene-coated steel sheet of the present disclosure is not particularly limited, but may be, for example, expressed on the basis of a total amount of 100 wt%.

As will be described below in detail, the solution composition may form a coating layer on at least one surface of a substrate to which the composition may be applied. In the present disclosure, the substrate may be the above-described coated steel sheet, for example, a zinc-coated steel sheet, a zinc-based alloy-coated steel sheet, an aluminum-coated steel sheet, an aluminum-based alloy-coated steel sheet, a cold-rolled steel sheet, or a hot-rolled steel sheet.

Hereinafter, each component constituting the solution composition will be described in detail.

The solution composition for a graphene-coated steel sheet according to an example embodiment may contain graphene. In the steel sheet coated with graphene, corrosion resistance, heat dissipation properties, conductivity, adhesion, strength, workability, and the like may be improved. The solution composition for a graphene-coated steel sheet may contain, based on 100 wt% of solid content, 0.1 to 30 wt% of graphene, specifically 0.1 to 10 wt% of graphene, and more specifically 1 to 5 wt% of graphene. When the content of graphene is less than 0.1 wt% based on 100 wt% of solid content, it may be difficult to exhibit the inherent properties of graphene, and when the content of graphene exceeds 30 wt%, dispersion stability of the solution may be reduced, corrosion resistance of the coating layer may be reduced, and adhesion between graphene and the coating layer may be lowered.

The solution composition for a graphene-coated steel sheet according to an example embodiment may contain a main resin including two or more types of acrylic-based resins. The solution composition containing the main resin may have excellent dispersion stability with graphene, and may have excellent elongation and workability when coating a steel sheet.

The two or more types of acrylic-based resins may be two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate, and specifically, may be a copolymer of ethylene acrylic acid (EAA) and polyethylene (PE) and a copolymer of ethylene acrylic acid (EAA) and polyurethane (PU).

When the main resin includes two types of acrylic-based resins, a content ratio of the respective resins may be 1:1 to 1:6, and specifically may be 1:3 to 1:5. When the main resin includes the two types of acrylic-based resins at the above content ratio, corrosion resistance, workability, and coating adhesion may be improved, and physical properties of the coating layer may be improved as compared with a case in which one type of acrylic-based resin is included.

The main resin is not particularly limited, but may further include, for example, at least one selected from the group consisting of an epoxy-based resin, a urethane-based resin, a fluorine-based resin, a polyester-based resin, a polyethylene-based resin, and a vinyl chloride-based resin.

The epoxy-based resin may be at least one selected from the group consisting of a bisphenol A-type resin, a bisphenol F-type resin, a novolac resin, an acrylic-modified epoxy resin, a cycloaliphatic resin, and a glycidyl amine-type resin.

The urethane-based resin may be at least one selected from the group consisting of polyurethane prepared from isophorone diisocyanate, adipic acid, and a polyhydric alcohol, acrylic polyol, and polyisocyanate.

The fluorine-based resin may be at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

The solution composition for a graphene-coated steel sheet may contain, based on 100 wt% of solid content, 55 to 90 wt% of a main resin, and specifically 60 to 90 wt% of a main resin. When the content of the main resin is less than 55 wt% based on 100 wt% of solid content, corrosion resistance, workability, and coating adhesion may be degraded, and dispersion stability of graphene may be degraded, and when the content of the main resin exceeds 90 wt%, heat dissipation properties may be degraded.

The solution composition for a graphene-coated steel sheet according to an example embodiment may further contain a physical property improver or other additives.

The physical property improver may improve adhesion between the steel sheet and the coating layer, and may improve corrosion resistance. The physical property improver may be at least one selected from the group consisting of a titanium-based compound, an ammonium phosphate salt, a vanadium-based compound, an organic phosphoric acid, a phosphoric acid amine salt, and an organic acid, and specifically, may be at least one selected from the group consisting of a titanium-based compound and an ammonium phosphate salt.

The solution composition for a graphene-coated steel sheet may contain 5 to 40 wt% of a physical property improver based on 100 wt% of solid content. When the content of the physical property improver in the solution composition for a graphene-coated steel sheet is less than 5 wt%, physical properties of the coated steel sheet may be degraded, and when the content exceeds 40 wt%, corrosion resistance, adhesion, workability, and the like may be degraded.

The other additives may be at least one selected from the group consisting of a leveling agent, a wetting agent, a curing agent, and an antifoaming agent.

The leveling agent may be at least one selected from the group consisting of silicone-modified polyacrylate, polyacrylate, fluorine-modified polyacrylate, and polysiloxane.

The wetting agent serves to allow the solution composition for a graphene-coated steel sheet to be well attached to a steel sheet, and may be at least one selected from the group consisting of a polyether-modified polyalkylsiloxane-based surfactant, an aralkyl-modified polyalkylsiloxane-based surfactant, a polyether-modified siloxane-based surfactant, a polymer-type fluorine-based surfactant, and an alcohol alkoxylate (non-silicone-based).

The curing agent serves to allow the solution composition for a graphene-coated steel sheet to be coated and dried to form a dried coating film, and may be at least one selected from the group consisting of an amine-based compound, an amide-based compound, a silane coupling agent, a carbodilite-based compound, an isocyanate-based compound, an aziridine-based compound, an epoxy-based compound, and a crosslinker.

The antifoaming agent serves to reduce generation of bubbles when the solution composition for a graphene-coated steel sheet is stirred and when roll coating is performed, and may be at least one selected from the group consisting of a silicone-based antifoaming agent, a mineral oil-based antifoaming agent, and a polymer-based antifoaming agent (free of silicone and mineral oil).

The solution composition for a graphene-coated steel sheet may contain 1 to 5 wt% of other additives based on 100 wt% of solid content.

The solution composition for a graphene-coated steel sheet according to an example embodiment may further contain the balance of a solvent. The solvent may be at least one selected from the group consisting of water, 1-ethyl-2-pyrrolidinone (NEP), and dimethyl sulfoxide (DMSO).

Next, a steel sheet including a predetermined coating layer formed by surface-treating the steel sheet with the above-described solution composition according to another example embodiment of the present disclosure will be described in detail.

The coated steel sheet may be at least one selected from the group consisting of a zinc-coated steel sheet, a zinc-based alloy-coated steel sheet, an aluminum-coated steel sheet, an aluminum-based alloy-coated steel sheet, a cold-rolled steel sheet, and a hot-rolled steel sheet.

The above-described coated steel sheet may include a coating layer formed on a surface thereof by coating the composition of the present disclosure in a solution state, and the coating layer may have a thickness of 0.1 to 20 µm.

When the thickness of the coating layer is less than 0.1 µm, the surface treatment solution composition is applied in a thin layer to peak portions of roughness present on the surface of the coated steel sheet, thereby causing a problem in that corrosion resistance is reduced. On the other hand, when the thickness exceeds 20 µm, a thick coating layer is formed, resulting in degraded workability and increased solution treatment costs, which is economically disadvantageous.

Here, the thickness refers to a thickness after drying.

Furthermore, the present disclosure will describe a method for manufacturing a surface-treated steel sheet using the composition.

More specifically, the method may include providing a coated steel sheet including a plating layer formed on at least one surface thereof; coating the plating layer with the above-described solution composition; and drying the coated steel sheet.

The solution composition may be prepared by adding graphene, a main resin, a physical property improver, and additives to a solvent in respective amounts, and then stirring the mixture.

In applying the composition of the present disclosure in a solution state to the steel sheet, a commonly used coating method may be applied, and thus the present disclosure is not particularly limited thereto.

For example, a coating process may be performed by selecting one of bar coating, roll coating, spraying, dipping, spray squeezing, and dip squeezing, but the method is not particularly limited thereto.

A process of drying the steel sheet coated with the composition may be performed in a temperature range of 40 to 280°C based on a peak metal temperature (PMT) of a material (steel sheet).

When the peak metal temperature of the material is lower than 40°C, formation of a robust coating structure may be insufficient, and thus corrosion resistance and blackening resistance may be degraded. On the other hand, when the temperature exceeds 280°C, hardness of the coating film may excessively increase, and thus corrosion resistance of a processed portion may be degraded, and surface quality may be degraded due to yellowing caused by excessive heat.

The steel sheet after completion of the drying treatment may include a coating layer having a thickness of 0.1 to 2.0 µm after drying.

In the present disclosure, means for performing the drying treatment are not particularly limited, but it should be noted that equipment such as an induction oven or a hot-air drying furnace may be used, and conditions for such equipment may be conventional.

### Mode for Invention

Hereinafter, the present disclosure will be described in more detail with reference to examples. However, the descriptions of these examples are merely for illustrating the practice of the present disclosure, and the present disclosure is not limited by the descriptions of these examples. This is because the scope of the present disclosure is determined by the matters recited in the claims and matters able to be reasonably inferred therefrom.

### Preparation Examples

### 1. Preparation of Solution Composition for Graphene-Coated Steel Sheet

### (1) Preparation Examples 1 to 8

A solution composition for a graphene-coated steel sheet was prepared by stirring graphene, a main resin, and a physical property improver in the ratios shown in Table 1.

As the main resin, a mixture was used, the mixture being obtained by mixing, at a mass ratio of 3:1 to 6:1, two types of resins, that is, a solvent-free type ethylene acrylic acid (EAA) and polyethylene (PE) copolymer resin containing about 2% trimethoxysilane (TMOS) in side chains, and a solvent-free type EAA and PU copolymer resin. As the physical property improver, a mixture of a Ti compound and an ammonium phosphate salt was used.

### (2) Comparative Preparation Example 1

A solution composition for a graphene-coated steel sheet was prepared in the same manner as in the above Preparation Examples, except that one type of ethylene acrylic acid (EAA) and polyethylene (PE) copolymer resin was used as the main resin.

### (3) Comparative Preparation Example 2

A solution composition for a graphene-coated steel sheet was prepared in the same manner as in the above Preparation Examples, except that one type of EAA and PU copolymer resin was used as the main resin.

**[Table 1]**

| | Graphene (wt%) | Main resin (wt%) | Physical property improver (wt%) |
|---|---|---|---|
| Preparation Example 1 | 5 | 60 | 35 |
| Preparation Example 2 | 5 | 70 | 25 |
| Preparation Example 3 | 5 | 80 | 15 |
| Preparation Example 4 | 5 | 90 | 5 |
| Preparation Example 5 | 5 | 50 | 45 |
| Preparation Example 6 | 5 | 40 | 55 |
| Preparation Example 7 | 5 | 30 | 65 |
| Preparation Example 8 | 5 | 95 | 0 |
| Comparative Preparation Example 1 | 5 | 80 | 15 |
| Comparative Preparation Example 2 | 5 | 80 | 15 |

### 2. Manufacture of Coated Steel Sheet

A surface of an electrogalvanized steel sheet was coated with each of the solution compositions for a graphene-coated steel sheet of Preparation Examples 1 to 8 and Comparative Preparation Examples 1 and 2 using a No. 10 bar coater, and then dried at a PMT of 180°C for 20 seconds, thereby manufacturing a coated steel sheet including a coating film having a thickness of 5 µm.

Coated steel sheets of Examples 1 to 4 were manufactured using the compositions of Preparation Examples 1 to 4, respectively, and coated steel sheets of Comparative Examples 1 to 6 were manufactured using the compositions of Preparation Examples 5 to 8 and Comparative Preparation Examples 1 and 2, respectively.

### Evaluation Examples

Dispersion stability of each of the solution compositions for a graphene-coated steel sheet of Preparation Examples 1 to 8 and Comparative Preparation Examples 1 and 2 was evaluated and is shown in Table 2, and adhesion and corrosion resistance of the coated steel sheets of Examples 1 to 4 and Comparative Examples 1 to 6 were evaluated and are shown in Table 3.

### 1. Dispersion Stability

Dispersion stability was measured by comparing the states of the solution compositions for a graphene-coated steel sheet of Preparation Examples 1 to 8 after being left to stand in a glass container for one week. The evaluation criteria for the dispersion stability are as follows.

### <Evaluation Criteria for Dispersion Stability>

○: Graphene is not separated from the binder resin
△: Graphene is partially separated from the binder resin
X: Graphene is separated from the binder resin and completely precipitated

### 2. Adhesion

Adhesion of each of the surfaces of the coated steel sheets manufactured in Examples 1 to 4 and Comparative Examples 1 to 6 was evaluated for processed portions, flat portions, and bending workability.

For the processed portion, 100 squares were formed in a horizontal and vertical grid pattern at 1 mm intervals on each of the surfaces of the coated steel sheets manufactured in Examples 1 to 4 and Comparative Examples 1 to 6 using a sharp knife with a cross-cut guide, the gridded portion was pushed up to a height of 6 mm using an Erichsen tester, and Scotch tape (NB-1, manufactured by Ichiban) was attached to and then removed from the pushed-up portion, and evaluation was performed by observing the state of the peeled surface.

For the flat portion, evaluation was performed by forming 100 squares in a horizontal and vertical grid pattern at 1 mm intervals, attaching Scotch tape (NB-1, manufactured by Ichiban) directly thereto and then removing the Scotch tape, and observing the state of the peeled surface.

For both the processed portion and the flat portion, the evaluation results were expressed as "the number of squares remaining on the surface/100." That is, when no peeled portion was present on the surface, the result was expressed as "100/100", when peeling occurred in 10 squares, the result was expressed as "90/100", and when peeling occurred in 20 squares, the result was expressed as "80/100."

For bending, the surface of the coated specimen was bent by 180° and then placed in a vise and clamped until it became flat (0T, 1T, 2T, and 3T bending were performed). The occurrence of peeling and cracking of the coating film at the bent portion was evaluated.

### 3. Corrosion Resistance

The coated steel sheets manufactured in Examples 1 to 4 and Comparative Examples 1 to 6 were processed to prepare cup-shaped specimens, and a salt solution having a salt concentration of 5% and a temperature of 35°C was uniformly sprayed onto the specimens at a spray pressure of 1 kg/cm² using a salt spray tester (SST), and then the time at which red rust occurred on side surfaces of the cup-shaped specimens was measured. The evaluation criteria for the corrosion resistance are as follows.

### <Evaluation Criteria for Corrosion Resistance>

⊚: Time until white rust occurs is 72 hours or longer
∘: Time until white rust occurs is 48 hours or longer and shorter than 72 hours
△: Time until white rust occurs is 24 hours or longer and shorter than 48 hours

**[Table 2]**

| | Dispersion stability |
|---|---|
| Preparation Example 1 | ○ |
| Preparation Example 2 | ○ |
| Preparation Example 3 | ○ |
| Preparation Example 4 | ○ |
| Preparation Example 5 | ○ |
| Preparation Example 6 | Δ |
| Preparation Example 7 | X |
| Preparation Example 8 | ○ |
| Comparative Preparation Example 1 | Δ |
| Comparative Preparation Example 2 | Δ |

**[Table 3]**

| | Adhesion | | | Corrosion resistance |
|---|---|---|---|---|
| | C.E.T 6 (Processed portion) | Cross-cut (Flat portion) | Bending | |
| Example 1 | 100/100 | 100/100 | No cracks | ⊚ |
| Example 2 | 100/100 | 100/100 | No cracks | ⊚ |
| Example 3 | 100/100 | 100/100 | No cracks | ⊚ |
| Example 4 | 100/100 | 100/100 | No cracks | ⊚ |
| Comparative Example 1 | 90/100 | 80/100 | Coating layer slippage | ○ |
| Comparative Example 2 | 80/100 | 80/100 | Coating layer slippage | Δ |
| Comparative Example 3 | 80/100 | 80/100 | Coating layer slippage | Δ |
| Comparative Example 4 | 70/100 | 75/100 | Coating layer slippage | Δ |
| Comparative Example 5 | 50/100 | 70/100 | Crack occurrence | Δ |
| Comparative Example 6 | 80/100 | 90/100 | Coating layer slippage | Δ |

Referring to Table 2, it can be seen that the compositions of Preparation Examples 1 to 5 and 8 according to the present disclosure have remarkably excellent dispersion stability.

On the other hand, it was confirmed that the compositions of Preparation Examples 6 and 7, in which the content of the main resin was low, exhibited insufficient dispersion stability, and the compositions of Comparative Preparation Examples 1 and 2, in which only one type of main resin was used, also exhibited insufficient dispersion stability.

Referring to Table 3, it was confirmed that the coated steel sheets of Examples 1 to 4 according to the present disclosure exhibited excellent adhesion and corrosion resistance.

In contrast, in the case of the coated steel sheets of Comparative Examples 1 to 6, it was confirmed that adhesion and corrosion resistance were insufficient. Specifically, it was considered that the coated steel sheets of Comparative Examples 1 to 3 failed to form a robust coating layer because the content of the main resin was low, the coated steel sheet of Comparative Example 4 exhibited degraded physical properties because the content of the main resin was excessively high and the content of the physical property improver was low, and the coated steel sheets of Comparative Examples 5 and 6 exhibited insufficient adhesion and corrosion resistance because only one type of main resin was used, resulting in poor dispersion stability of graphene.

## Claims

1. A solution composition for a graphene-coated steel sheet, the solution composition comprising, based on 100 wt% of solid content:
0.1 to 30 wt% of graphene; and
55 to 90 wt% of a main resin including two or more types of acrylic-based resins.

2. The solution composition of claim 1, wherein the two or more types of acrylic-based resins are two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate.

3. The solution composition of claim 1, wherein the main resin further includes at least one selected from the group consisting of an epoxy-based resin, a urethane-based resin, a fluorine-based resin, a polyester-based resin, a polyethylene-based resin, and a vinyl chloride-based resin.

4. The solution composition of claim 3, wherein the epoxy-based resin is at least one selected from the group consisting of a bisphenol A-type resin, a bisphenol F-type resin, a novolac resin, an acrylic-modified epoxy resin, a cycloaliphatic resin, and a glycidyl amine-type resin.

5. The solution composition of claim 3, wherein the urethane-based resin is at least one selected from the group consisting of polyurethane prepared from isophorone diisocyanate, adipic acid, and a polyhydric alcohol, acrylic polyol, and polyisocyanate.

6. The solution composition of claim 3, wherein the fluorine-based resin is at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

7. The solution composition of claim 1, further comprising a physical property improver or other additives.

8. The solution composition of claim 7, wherein the physical property improver is at least one selected from the group consisting of a titanium-based compound, an ammonium phosphate salt, a vanadium-based compound, an organic phosphoric acid, a phosphoric acid amine salt, and an organic acid.

9. The solution composition of claim 7, wherein the physical property improver is contained in an amount of 5 to 40 wt% based on 100 wt% of solid content.

10. The solution composition of claim 7, wherein the other additives are at least one selected from the group consisting of a leveling agent, a wetting agent, a curing agent, and an antifoaming agent.

11. The solution composition of claim 7, wherein the other additives are contained in an amount of 1 to 5 wt% based on 100 wt% of solid content.

12. The solution composition of claim 1, further comprising the balance of a solvent,
wherein the solvent is at least one selected from the group consisting of water, 1-ethyl-2-pyrrolidinone (NEP), and dimethyl sulfoxide (DMSO).

13. A graphene-coated steel sheet comprising:
a coated steel sheet; and
a coating layer formed on at least one surface of the steel sheet from the solution composition for a graphene-coated steel sheet of any one of claims 1 to 12.

14. The graphene-coated steel sheet of claim 13, wherein the coated steel sheet is at least one selected from the group consisting of a zinc-coated steel sheet, a zinc-based alloy-coated steel sheet, an aluminum-coated steel sheet, an aluminum-based alloy-coated steel sheet, a cold-rolled steel sheet, and a hot-rolled steel sheet.
